# EUROPEAN PATENT SPECIFICATION

(11) **EP 1 193 829 B1**
(45) Date of publication and mention of the grant of the patent: **27.05.2009**
(21) Application number: 01120517.6
(22) Date of filing: 28.08.2001
(51) Int. Cl.: H02K 3/28, H02K 3/52

(54) **Stator for rotary electromechanical device**
Ständer für eine rotierende elektromechanische Vorrichtung
Stator pour dispositif électro-mécanique rotatif

(30) Priority: 12.09.2000 JP 2000275740
(43) Date of publication of application: 03.04.2002
(73) Proprietor: MITSUBISHI DENKI KABUSHIKI KAISHA, Chiyoda-ku Tokyo 100-8310 (JP)
(72) Inventor: Takai, Keiji,, Tokyo 100-8310 (JP); Hashiguchi,Naoki, Tokyo 100-8310 (JP); Miyake, Nobuaki,, Tokyo 100-8310 (JP)
(74) Representative: Sajda, Wolf E.

(56) References cited:
- EP-A- 0 863 601
- PATENT ABSTRACTS OF JAPAN vol. 0060, no. 60 (E-102), 17 April 1982 (1982-04-17) & JP 57 001202 A (NORDSON KK), 6 January 1982 (1982-01-06)

## Description

### BACKGROUND OF THE INVENTION AND RELATED ART STATEMENT

The present invention relates generally to a stator of an inner rotor type rotary electromechanical device and, more particularly, pertains to a wire-connecting structure for electrical connections of coils to the exterior of the device.

In particular, the invention relates to a stator according to the preamble of claim 1. Such a stator is known from EP-A-863 601.

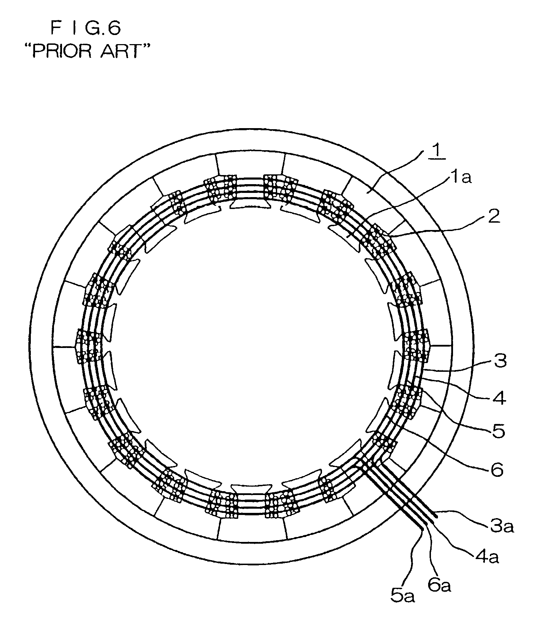

FIG. 6 is a diagram generally showing the construction of a stator of a conventional rotary electromechanical disclosed in JP-A-10-248187.

In this Figure, designated by the numeral 1 is an annular stator core in which a plurality of magnetic pole teeth 1a projecting radially inward are formed at specific intervals in a circumferential direction, designated by the numeral 2 are a plurality of coils closely wound around the individual magnetic pole teeth 1a, designated by the numerals 3, 4 and 5 are first connecting conductors disposed in concentric ringlike form along an axial end face of the stator core 1, joining terminal ends of the coils 2 of each phase (U, V, W) together at one end, and designated by the numeral 6 is a second connecting conductor disposed in ringlike form concentrically with the individual first connecting conductors 3, 4, 5, joining terminal ends of all the coils 2 together at the other end. Outlet conductors 3a, 4a, 5a and 6a individually connected to the first and second connecting conductors 3, 4, 5, 6 for establishing electrical connections between the rotary electromechanical device and its exterior extend radially outward as illustrated.

In the conventional rotary electromechanical device whose the stator is constructed as described above, the coils 2 of the U phase are connected to the first connecting conductor 3 at their one end, the coils 2 of the V phase are connected to the first connecting conductor 4 at their one end, and the coils 2 of the W phase are connected to the first connecting conductor 5 at their one end, for example, to combine them electrically, and the coils 2 are all connected to the second connecting conductor 6 at their common terminal side and to external equipment via the individual outlet conductors 3a, 4a, 5a, 6a.

As stated above, the stator of the conventional rotary electromechanical device is constructed such that the first connecting conductors 3, 4, 5 to which the coils 2 of the individual phases (U, V, W) are connected at one end and the second connecting conductor 6 to which the coils 2 are all connected at the other end are led to the exterior of the device via the respective outlet conductors 3a, 4a, 5a, 6a. As is obvious from the Figure, the outlet conductor 4a runs across the first connecting conductor 3, the outlet conductor 5a runs across the connecting conductors 3 and 4, and the outlet conductor 6a runs across the connecting conductors 3, 4 and 5, and these outlet conductors 4a, 5a, 6a are led to the exterior radially outward. This construction has a problem that crossover portions of the outlet conductors 4a, 5a, 6a bulge out in the axial direction of the stator core 1, making it difficult to reduce its thickness.

The document EP-A-863 601 discloses a connection configuration for a stator as defined in the preamble of patent claim 1. In the conventional device, the connection configuration comprises three types of electric conductors corresponding to U-phase, V-phase and W-phase, respectively, and shaped like a ring. Each electric conductor has a projection extended in four directions corresponding to four groups of coil windings each of the same phase, and a lead representing each phase and extending outward of an outer diameter of the stator. The electric conductors and a common electric conductor are arranged on an end plate concentrically. Connections between the coil windings and the projections respectively of the same phase are radially arranged at places outward of grooves of an end plate so to effect connection therebetween. The leading ends of the coil windings are overlapped with projections, while the trailing ends of the coil windings are overlapped with other projections. Each overlapped portion is covered with a caulking member and then caulked for establishing a connection between the coil winding and the electric conductor.

### SUMMARY OF THE INVENTION

The present invention has been made to solve the aforementioned problem of the prior art. Accordingly, it is an object of the invention to provide a stator of a rotary electromechanical device which makes it possible to reduce the stator thickness.

According to the invention, this object is solved by a stator as defined in patent claim 1. Advantageous further developments of the stator according to the invention are specified in the sub-claims.

In particular the invention provides a stator for a rotary electromechanical device, comprising:
an annular stator core in which a plurality of magnetic pole teeth projecting radially inwardly are formed at specific intervals in a circumferential direction;
a plurality of coils closely wound around the individual magnetic pole teeth with bobbins placed in between,
a plurality of first connecting conductors disposed in concentric circular form along an axial end face of the stator core, joining together terminal ends of each group of the coils of the same phase which are connected parallel to one another at one side of the coils; and
a second connecting conductor disposed in circular form concentrically with the individual first connecting conductors, joining together terminal ends of all the coils at their opposite side;
wherein extreme ends of the first and second connecting conductors are bent into radial directions at specific positions along the circumferential direction of the stator core and led radially outwardly in a plane perpendicular to the axial direction of the stator core at specific intervals in the circumferential direction in a manner that they do not overlap one another and do not cross one another, and is characterized in that joints between the first and second connecting conductors and the terminal ends of the individual coils are accommodated inside of insulating retainer members which are fixed to the respective bobbins on which the coils are wound.

Such a construction makes it possible to reduce the thickness of the stator of a rotary electromechanical device and to improve the reliability thereof.

In one embodiment of the invention, an annular area where the first and second connecting conductors are disposed falls within an annular area where the coils are wound. This enables a further reduction in the thickness of the stator of a rotary electromechanical device.

In a specific embodiment of the invention, non-woven fabric is attached to areas of the insulating retainer members where the joints between the first and second connecting conductors and the terminal ends of the individual coils are located. This enables an improvement in insulating performance, not to mention an improvement in reliability.

In a still further embodiment of the invention, the first and second connecting conductors are tied to the respective bobbins by insulating threads. This construction makes it possible to achieve a further improvement in reliability, not to mention a reduction in the thickness of the stator.

These and other objects, features and advantages of the invention as defined by the appended claims will become more apparent upon reading the following detailed description in conjunction with the accompanying drawings.

### BRIEF DESCRIPTION OF THE DRAWINGS

FIG. 1 is a plan view generally showing the construction of a stator of a rotary electromechanical device according to a preferred embodiment of the present invention;
FIG. 2 is a wiring diagram showing connections between coils and respective outlet conductors of the stator of the rotary electromechanical device of FIG. 1;
FIG. 3 is an enlarged fragmentary plan view showing the construction of a principal part of the stator of the rotary electromechanical device of FIG. 1;
FIG. 4 is a cross-sectional view taken along lines IV-IV of FIG. 3;
and FIG. 5 is an exploded perspective view showing the construction of a cover, an insulating retainer member and a bobbin shown in FIG. 4; and
FIG. 6 is a plan view generally showing the construction of a stator of a conventional rotary electromechanical device.

### DETAILED DESCRIPTION OF THE PREFERRED EMBODIMENT OF THE INVENTION

A preferred embodiment of the invention is now described below with reference to the drawings.

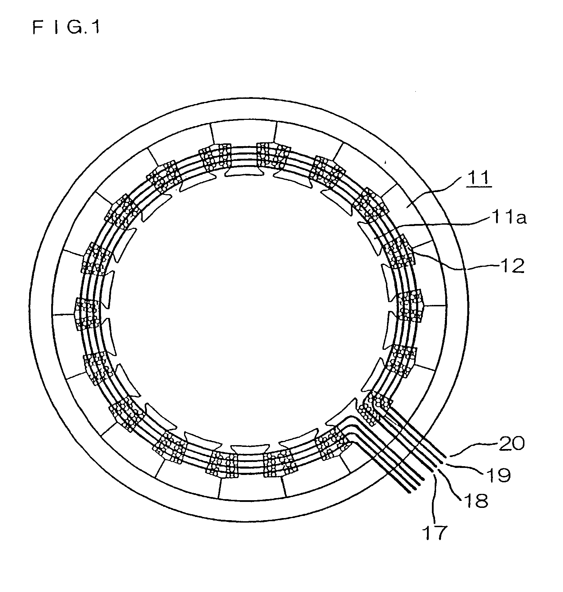

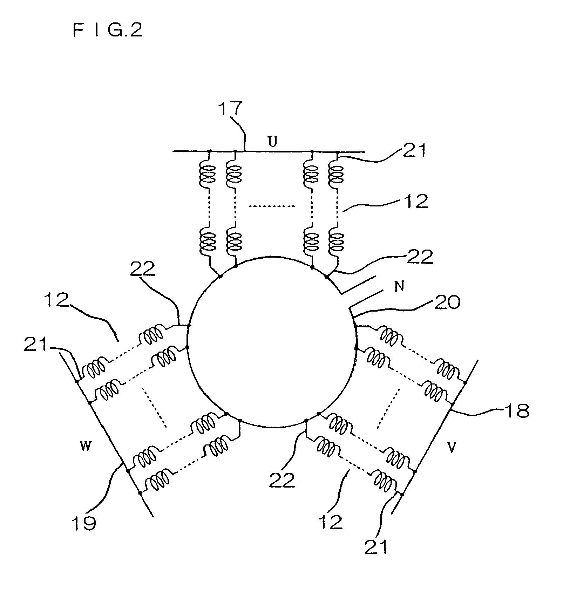

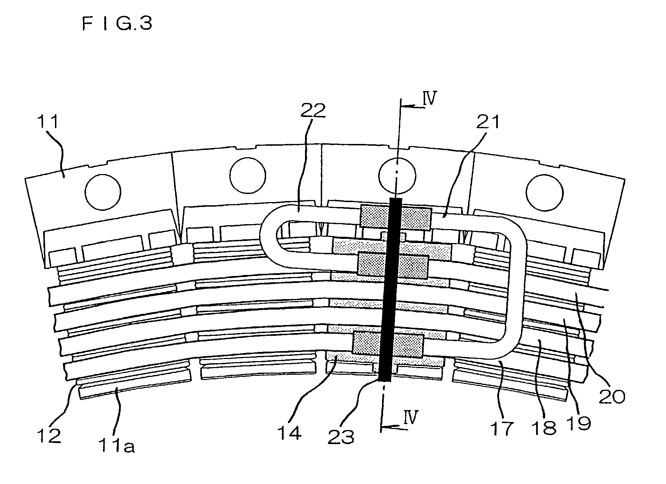

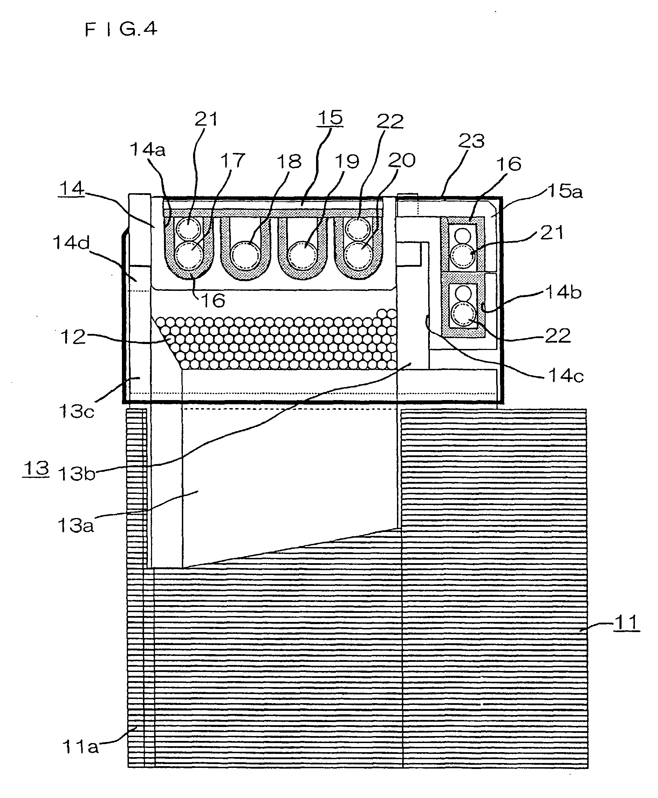

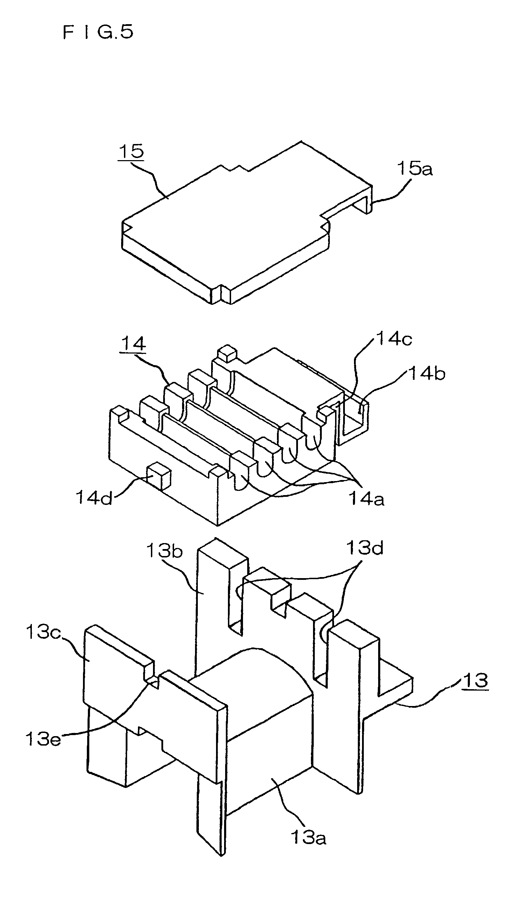

FIG. 1 is a plan view generally showing the construction of a stator of a rotary electromechanical device according to the embodiment of the present invention; FIG. 2 is a wiring diagram showing connections between coils and respective connecting conductors of the stator of the rotary electromechanical device of FIG. 1; FIG. 3 is an enlarged fragmentary plan view showing the construction of a principal part of the stator of the rotary electromechanical device of FIG. 1; FIG. 4 is a cross-sectional view taken along lines IV-IV of FIG. 3; and FIG. 5 is an exploded perspective view showing the construction of one each cover 15, insulating retainer member 14 and bobbin 13 shown in FIG. 4. It is to be noted that later-described bobbins 13 and insulating retainer members 14 are not illustrated in FIG. 1.

In these Figures, designated by the numeral 11 is an annular stator core in which a plurality of magnetic pole teeth 11a projecting radially inward are formed at specific intervals in a circumferential direction, designated by the numeral 12 are a plurality of coils closely wound around the individual magnetic pole teeth 11a with the aforementioned bobbins 13 placed in between, and designated by the numeral 13 is one of the bobbins 13 made of an insulating material, each bobbin 13 including a barrel portion 13a having a U-shaped cross section and a pair of end plates 13b, 13c formed at both ends of the barrel portion 13a as depicted in FIG. 5. The bobbins 13 are disposed in pairs in such a manner that each magnetic pole tooth 11a is sandwiched between inner surfaces of the barrel portions 13a of two bobbins 13 located at both ends in the axial direction of the stator. The coil 12 is wound around the barrel portions 13a of each bobbin pair 13. There are formed cutouts 13d in the end plate 13b at one end of each bobbin 13 for passing later-described lead wires 21, 22 which are connected to terminal ends of the coil 12 while a cutout 13e, in which a projecting part 14d of each insulating retainer member 14 is fitted, is formed in the end plate 13c at the other end.

Designated by the numeral 14 is the aforementioned insulating retainer member which has four grooves 14a formed in a top surface with specific intervals widthwise, grooves 14b and 14c opening upward and downward, respectively, formed at one end by bending operation, and the aforementioned projecting part 14d formed at the opposite end, as shown in FIG. 5. The insulating retainer member 14 is locked to the corresponding bobbin 13 by fitting the groove 14c at one end onto the end plate 13b of the bobbin 13 and the projecting part 14d at the other end into the cutout 13e of the end plate 13c. Designated by the numeral 15 is the aforementioned cover which is fitted to the top of the insulating retainer member 14, in which a flange 15a for covering the groove 14b of the insulating retainer member 14 is formed at one end of the cover 15 as shown in FIG. 5.

The insulating retainer member 14 and the cover 15 are attached to each of the bobbins 13 provided at one axial end face of the stator core 11, and later-described first and second connecting conductors 17, 18, 19, 20 are accommodated in the grooves 14a formed in the each insulating retainer member 14. Therefore, an annular area where the first and second connecting conductors 17, 18, 19, 20 are disposed falls within an annular area where the individual coils 12 are wound. This means that the first and second connecting conductors 17, 18, 19, 20 can be run between the end plates 13b, 13c of the individual bobbins 13 so that an increase in physical dimensions in the axial direction of the stator core 11 can be minimized.

Designated by the numeral 16 are pieces of non-woven fabric which line inside surfaces of both grooves 14a, 14b formed in each insulating retainer member 14, designated by the numerals 17, 18 and 19 are the aforementioned first connecting conductors which are disposed in concentric circular form along the axial end face of the stator core 11 in the annular area where the coils 12 are wound, and designated by the numeral 20 is the aforementioned second connecting conductor disposed concentrically with the first connecting conductors 17, 18, 19 on their outside. These first and second connecting conductors 17, 18, 19, 20 are retained in the respective grooves 14a formed in the insulating retainer members 14 which are disposed at specific positions along the circumferential direction, the grooves 14a being lined with the non-woven fabric 16, wherein both ends of each of the connecting conductors 17, 18, 19, 20 are bent into radial directions at specific positions along the circumferential direction of the stator core 11 and taken out to the exterior at specific intervals as shown in FIG. 1.

In this arrangement, neither of the connecting conductors 17, 18, 19, 20 is formed into a closed ring, but their extreme ends are led radially outward in a plane perpendicular to the axial direction of the stator core 11 in a manner that they do not overlap one another as shown in FIG. 1.

In this embodiment, the coils 12 are parallel-connected in groups of six to constitute three phases (U, V, W) as shown in FIG. 2, for example. The terminal ends of the parallel-connected coils 12 of the U phase are connected to the first connecting conductor 17 at one side, the terminal ends of the parallel-connected coils 12 of the V phase are connected to the first connecting conductor 18 at one side, and the terminal ends of the parallel-connected coils 12 of the W phase are connected to the first connecting conductor 19 at one side via the respective lead wires 21. Also, the terminal ends of all the coils 12 to be joined to a neutral point are connected to the second connecting conductor 20 at the opposite side via the respective lead wires 22. The connecting conductors 17, 18, 19, 20 and the lead wires 21, 22 insulated by the non-woven fabric 16 are then accommodated in the grooves 14a, 14b as shown in FIGS. 3 and 4.

Finally, after covering the individual grooves 14a, 14b by fitting the covers 15 to the top of the individual insulating retainer members 14, an insulating thread 23 is wound around each assembly of the bobbin pair 13, the insulating retainer member 14 and the cover 15. More specifically, the insulating thread 23 is wound from one end of the assembly to the opposite end over the inside of the barrel portion 13a of each bobbin pair 13 and, folded at the opposite end side, turned back to the starting point of winding over a top surface of the cover 15. The insulating thread 23 is wound around the assembly several times in this fashion to bind the insulating retainer member 14 and the cover 15 to the bobbin pair 13 and to securely hold the connecting conductors 17, 18, 19, 20 and the lead wires 21, 22 in the insulating retainer members 14.

According to the present embodiment, both ends of each of the first connecting conductors 17, 18, 19 joining together the terminal ends of the parallel-connected coils 12 of the same phase (U, V, W) at one side as well as both ends of the second connecting conductor 20 joining together the terminal ends of all the coils 12 at the opposite side are bent into the radial directions at the specific positions along the circumferential direction of the stator core 11 and led radially outward in the plane perpendicular to the axial direction of the stator core 11 at specific intervals as described above, the four connecting conductors 17, 18, 19, 20 being disposed in concentric circular form. In this construction, the individual connecting conductors 17, 18, 19, 20 do not cross one another, so that they do not bulge out in the axial direction of the stator core 11, making it possible to reduce its thickness.

Since the first and second connecting conductors 17, 18, 19, 20 are disposed within the annular area where the individual coils 12 are wound, just between the end plates 13b, 13c of the individual bobbins 13, it is possible to prevent the connecting conductors 17, 18, 19, 20 from further bulging out in the axial direction of the stator core 11. Also, since the first and second connecting conductors 17, 18, 19, 20 are accommodated within the insulating retainer members 14, it is possible to hold the connecting conductors 17, 18, 19, 20 in a stably fixed position, and by binding them with the insulating threads 23, it is possible to achieve increased reliability. Furthermore, since the stator core 11 is constructed such that each insulating retainer member 14 can be locked onto its corresponding bobbin 13, the invention serves to improve the efficiency of assembly.

Furthermore, since joints between the first and second connecting conductors 17, 18, 19, 20 and the lead wires 21, 22, which connect the connecting conductors 17, 18, 19, 20 to the coils 12, are accommodated inside the insulating retainer members 14, the lead wires 21, 22 are not exposed to the exterior and, thus, they do not spoil the appearance Moreover, the inside surfaces of the grooves 14a, 14b formed in the insulating retainer members 14, in which the lead wires 21, 22 are accommodated, are lined with the non-woven fabric 16, so that the non-woven fabric 16 absorbs liquid resin when it is applied to the aforementioned joints for electrical insulation, and this further improves insulation.

## Claims

1. A stator for a rotary electromechanical device,
comprising
- an annular stator core (11) in which a plurality of magnetic pole teeth (11a) projecting radially inwardly are formed at specific intervals in a circumferential direction;
- a plurality of coils (12) closely wound around the individual magnetic pole teeth (11a) with bobbins (13) placed in between;
- a plurality of first connecting conductors (17, 18, 19) disposed in concentric circular form along an axial end face of the stator core (11), joining together terminal ends of each group of the coils (12) of the same phase which are connected parallel to one another at one side of the coils (12); and
- a second connecting conductor (20) disposed in circular form concentrically with the individual first connecting conductors (17, 18, 19), joining together terminal ends of all the coils (12) at their opposite side;
wherein extreme ends of the first and second connecting conductors (17-19; 20) are bent into radial directions at specific positions along the circumferential direction of the stator core (11) and led radially outwardly in a plane perpendicular to the axial direction of the stator core (11) at specific intervals in the circumferential direction in a manner that they do not overlap one another and do not cross one another,
**characterized in that** joints between the first and second connecting conductors (17-19; 20) and the terminal ends of the individual coils (12) are accommodated inside of insulating retainer members (14) which are fixed to the respective bobbins (13) on which the coils (12) are wound.

2. The stator according to claim 1,
wherein an annular area where the first and second connecting conductors (17-19; 20) are disposed falls within an annular area where the coils (12) are wound.

3. The stator according to claim 1 or 2,
wherein the first and second connecting conductors (17-19; 20) are held by the insulating retainer members (14) disposed at specific intervals in the circumferential direction.

4. The stator according to any of claims 1 to 3,
wherein non-woven fabric (16) is attached to areas of the insulating retainer members (14) where the joints between the first and second connecting conductors (17-19; 20) and the terminal ends of the individual coils (12) are located.

5. The stator according to any of claims 1 to 4,
wherein the first and second connecting conductors (17-19; 20) are tied to the respective bobbins (13) by insulating threads (23).

## Patentansprüche

1. Stator für eine rotierende elektromechanische Vorrichtung,
wobei der Stator folgendes aufweist:
- einen ringförmigen Statorkern (11), an dem eine Vielzahl von radial nach innen ragenden Magnetpolzähnen (11a) in bestimmten Intervallen in Umfangsrichtung ausgebildet ist;
- eine Vielzahl von Spulen (12), die unter Verwendung von dazwischengesetzten Spulenträgern (13) eng um die einzelnen Magnetpolzähne (11a) gewickelt sind;
- eine Vielzahl erster Anschlußleiter (17, 18, 19), die in einer konzentrischen Kreisform entlang einer axialen Endfläche des Statorkerns (11) angeordnet sind und Anschlußenden von jeder Gruppe von Spulen (12) mit der gleichen Phase miteinander verbinden, die einander auf einer Seite der Spulen (12) parallelgeschaltet sind; und
- einen zweiten Anschlußleiter (20), der in einer Kreisform konzentrisch mit den einzelnen ersten Anschlußleitern (17, 18, 19) angeordnet ist und Anschlußenden von allen Spulen (12) auf deren gegenüberliegenden Seiten miteinander verbindet;
wobei äußerste Enden der ersten und des zweiten Verbindungsleiters (17-19; 20) an bestimmten Positionen entlang der Umfangsrichtung des Statorkerns (11) in Radialrichtung gebogen sind und in einer Ebene, die zu der Axialrichtung des Statorkerns (11) senkrecht ist, in bestimmten Intervallen in der Umfangsrichtung derart nach außen geführt sind, daß sie einander nicht überlappen und einander nicht kreuzen,
**dadurch gekennzeichnet,**
**daß** Verbindungsstellen zwischen den ersten Anschlußleitern und dem zweiten Anschlußleiter (17-19; 20) und den Anschlußenden der einzelnen Spulen (12) innerhalb von isolierenden Festhalteelementen (14) untergebracht sind, die an den jeweiligen Spulenträgern (13) festgelegt sind, auf die die Spulen (12) gewickelt sind.

2. Stator nach Anspruch 1,
wobei ein ringförmiger Bereich, in dem die ersten und der zweite Anschlußleiter (17-19; 20) angeordnet sind, sich innerhalb eines ringförmigen Bereichs befindet, in dem die Spulen (12) gewickelt sind.

3. Stator nach Anspruch 1 oder 2,
wobei die ersten und der zweite Anschlußleiter (17-19; 20) durch die isolierenden Festhalteelemente (14) gehalten sind, die in bestimmten Intervallen in Umfangsrichtung angeordnet sind.

4. Stator nach einem der Ansprüche 1 bis 3,
wobei ein Vliesmaterial (16) an Bereichen der isolierenden Festhalteelemente (14) angebracht ist, in denen sich die Verbindungsstellen zwischen den ersten und dem zweiten Anschlußleiter (17-19; 20) und den Anschlußenden der einzelnen Spulen (12) befinden.

5. Stator nach einem der Ansprüche 1 bis 4,
wobei die ersten Anschlußleitern und der zweite Anschlußleiter (17-19; 20) mit den jeweiligen Spulenträgern (13) durch isolierende Fäden (23) verbunden sind.

## Revendications

1. Stator pour dispositif électromécanique rotatif comprenant:
- un noyau de stator annulaire (11) dans lequel une pluralité de dents de pôle magnétique (11a) saillant radialement vers l'intérieur sont formées à intervalles spécifiques dans une direction périphérique;
- une pluralité d'enroulements (12) enroulés serrés autour des dents individuelles (11a) du pôle magnétique, des bobines (13) étant placées entre eux;
- une pluralité de premiers conducteurs de connexion (17, 18, 19) disposés de façon circulaire concentrique le long d'une face terminale axiale du noyau de stator (11), rejoignant les extrémités terminales de chaque groupe d'enroulements (12) de phase identique qui sont connectées en parallèle entre elles sur un côté des enroulements (12); et
- un second conducteur de connexion (20) disposé de façon circulaire concentriquement aux premiers conducteurs de connexion individuels (17, 18, 19), rejoignant les extrémités terminales de tous les enroulements (12) sur leur côté opposé;
dans lequel les extrémités extrêmes des premiers et du second conducteurs de connexion (17-19; 20) sont courbées dans des directions radiales à des emplacements spécifiques dans la direction périphérique du noyau de stator (11) et dirigées radialement vers l'extérieur dans un plan perpendiculaire à la direction axiale du noyau de stator (11) à intervalles spécifiques dans la direction périphérique, de manière qu'elles ne se chevauchent pas et ne se croisent pas les unes les autres,
**caractérisé en ce que** les joints entre les premiers et le second conducteurs de connexion (17-19; 20) et les extrémités terminales des enroulements individuels (12) sont insérés à l'intérieur d'éléments de retenue isolants (14) qui sont fixés aux bobines respectives (13) sur lesquelles les enroulements (12) sont enroulés.

2. Stator selon la revendication 1, dans lequel une zone annulaire dans laquelle les premiers et le second conducteurs de connexion (17-19; 20) sont disposés se trouve à l'intérieur d'une zone annulaire dans laquelle les enroulements (12) sont enroulés.

3. Stator selon la revendication 1 ou la revendication 2,
dans lequel les premiers et le second conducteurs de connexion (17-19; 20) sont maintenus par les éléments de retenue isolants (14) disposés à intervalles spécifiques dans la direction périphérique.

4. Stator selon l'une quelconque des revendications 1 à 3,
dans lequel un matériau non tissé (16) est fixé sur les surfaces des éléments de retenue isolants (14) où sont situés les joints entre les premiers et le second conducteurs de connexion (17-19; 20) et les extrémités terminales des enroulements individuels (12).

5. Stator selon l'une quelconque des revendications 1 à 4,
dans lequel les premiers et le second conducteurs de connexion (17-19; 20) sont noués aux bobines respectives (13) par des fils isolants (23).
